# EUROPEAN PATENT APPLICATION

(11) **EP 4 752 724 A1**
(43) Date of publication of application: **03.06.2026**
(21) Application number: 25219118.4
(22) Date of filing: 27.11.2025
(51) Int. Cl.: G06F 9/50

(54) **MIDDLEWARE LAYER FOR EXECUTING HIGH-PROCESSING TASKS IN RAN BASE STATIONS**

(30) Priority: 28.11.2024 IT 202400026895
(71) Applicant: Vodafone Group Services Limited, Newbury RG14 2FN (GB)
(72) Inventor: DARIOL, Viafro, London, W2 6BY (GB); BRIVIO, Stefano, London, W2 6BY (GB)
(74) Representative: Boult Wade Tennant LLP

(57) **Abstract**

A method and system for offloading a high-processing task by a user equipment to a base station of a radio access network. The method includes the user equipment communicating with a middleware layer executing on a processor of the base station and requesting that at least a part of the processing of the task is performed by computational resources available to the base station. The middleware layer utilizing the computational resources available to the base station to process the task and transmit the result back to the user equipment.

## Description

### Field of the invention

The present invention relates to a middleware layer integrated within Radio Access Network (RAN) base stations. This middleware layer is designed to offload and execute high-processing tasks, such as artificial intelligence (Al) computations and other demanding processing tasks, from mobile devices. By leveraging the spare computational power of base stations, the middleware layer enhances the performance and efficiency of mobile devices, reducing latency and improving overall user experience.

### Background section

High-processing tasks, also known as CPU-bound tasks, are tasks that require a lot of processing power from a computer's central processing unit (CPU), or processor. These tasks include, amongst others, video and graphics editing programs that edit video and graphics, games with high-resolution graphics, some complex mathematical calculations and image compression.

Memory intensive tasks are those that require a significant amount of RAM to function smoothly. These tasks often involve handling large amounts of data or performing complex operations, like gaming, video-editing, AR/VR applications and even some web browsing sessions for rich media content.

The mid-range till high-end devices come with limited number or GB of RAM, limiting multi-tasking capabilities and generating performance bottlenecks or lead to higher battery consumption. for example, in the high-end gaming or professional video editing use cases.

The integration of high-processing tasks and/or memory intensive tasks, particularly those involving artificial intelligence (Al), into mobile devices has transformed the way users interact with technology. As mobile devices become increasingly powerful, with advanced processors and improved energy efficiency, they are now capable of handling complex computational tasks that were once reserved for desktop computers and specialized hardware.

One significant application of AI in mobile devices is in photography. Modern smartphones utilize Al algorithms for image processing, enhancing photo quality through features like scene recognition, automatic adjustments, and real-time enhancements. The latest mobile (cell) phones employ machine learning to optimize photos, providing features like night vision that dramatically enhance night photography.

Another area where Al is making strides is in voice recognition and natural language processing (NLP). Virtual assistants such as Apple's Siri, Google Assistant, and Amazon's Alexa rely on Al to understand and respond to user commands. These assistants can process voice commands in real time, enabling tasks such as setting reminders, answering questions, and controlling smart home devices. The underlying Al models continuously learn from user interactions, improving their accuracy and responsiveness over time.

AI is also revolutionizing user experience through personalization. Mobile applications utilize AI to analyse user behaviour, preferences, and usage patterns, enabling tailored recommendations. For example, streaming services like Netflix and Spotify employ Al algorithms to suggest content based on individual user tastes, enhancing engagement and satisfaction.

Moreover, Al plays a vital role in security through biometric authentication methods such as facial recognition and fingerprint scanning. Smartphones equipped with Al-driven algorithms can securely identify users, enhancing device security while providing a seamless unlocking experience.

In gaming, mobile devices now support high-processing Al tasks that enhance gameplay. Al-driven non-player characters (NPCs) in mobile games create more immersive and responsive experiences. Games may utilize AI to improve NPC behaviour, making them more realistic and challenging.

As mobile devices continue to evolve, the implementation of high-processing tasks such as AI not only enhances functionality but also enriches the overall user experience, paving the way for innovative applications and services in everyday life. The ongoing advancements in Al technology will likely further expand these capabilities, making mobile devices even more integral to personal and professional activities.

However, as the demand for high-processing applications increases, the mobile hardware is struggling to keep up. The high-processing applications require increasingly faster computational speeds and higher power needs. Even if mobile devices are available with the required processing power, this requires the user to buy increasingly expensive hardware if they are to leverage the full advantage that these applications provide.

Accordingly, the potential of high-processing applications like Al may be limited by the user's hardware.

With the increasing demand for advanced mobile applications and services, mobile devices are required to perform complex computations, such as Al processing, real-time data analysis, and other high-processing tasks. These tasks require very high processing capabilities that are present only in high end devices and when performed, can significantly drain the battery and processing power of mobile devices, leading to reduced performance and user satisfaction.

Similar issues may occur for internet of things (IoT) devices, whereby onboard processing power does not match that required for certain tasks that it would otherwise be able to perform.

Therefore, there is a need for a solution that can offload these tasks from mobile devices or loT devices to a more capable infrastructure.

### Summary of the invention

To address the problems highlighted above, the present invention has been formulated to provide a middleware layer that operates within base stations to execute high-processing tasks on behalf of mobile devices. The middleware layer is designed to seamlessly integrate with existing RAN infrastructure and communicate with mobile devices to receive and process computational tasks. By offloading these tasks to the base station, the middleware layer reduces the computational requirement on mobile devices, enhances battery life, and improves the overall performance of mobile applications.

According to a first aspect of the present invention, there is provided a method of offloading a high-processing task by a user equipment to a base station of a radio access network, the method comprising: the user equipment communicating with a middleware layer executing on a processor of the base station and requesting that at least a part of the processing of the task is performed by computational resources available to the base station; and the middleware layer utilizing the computational resources available to the base station to process the task.

Optionally, upon completion of the processing of the task by the computational resources available to the base station, the middleware layer sends the results of the processing back to the user equipment.

The high-processing task may be Al computations, data analysis, and other demanding processing task.

The middleware layer may communicate with user equipment using communication protocols which may preferably be standardised.

Prior to the user equipment requesting that processing of the task is carried out by computational resources available to the base station, the user equipment may determine that the computational resources of the user equipment is insufficient for processing of the task by itself.

The method may further comprise executing a virtualisation layer on a processor of the user equipment, the virtualisation layer performing: intercepting the request to perform the task by the computational resources available to the base station; delegating to a control and resource management layer of the user equipment the assignment to control, allocate, schedule and synchronise the local and remote resources to perform the task.

The control and resource management layer of the user equipment may synchronise with a control and resource management layer of the middleware layer of the base station to determine the combined available computational resources of the user equipment and the base station.

The method may further comprise allocating at least a portion of processing of the task to the computational resources available to the base station.

The computational resources available to the base station may include at least one of the processors and the memory located at the base station.

The computational resources available to the base station may include remote computational resources connected to the base station via the radio access network, including network capabilities which could be reserved for the scope of the middleware layer following available standard reservation processes for network resources.

The availability to the user equipment of the computational resources available to the base station may be dependent on time.

The middleware of the base station may be installed and upgraded by a software update.

The user equipment may be a mobile device or an internet of things device.

The mobile device may be a smartphone, a tablet, a notebook or a laptop.

According to another aspect of the invention, there is provided a base station of a radio access network comprising at least one processor, the at least one processor executing a middleware layer, the middleware layer arranged to perform the above methods.

According to yet another aspect of the invention, there is provided a radio access network comprising at least one base station as set out above.

### Brief description of the drawings

Embodiments of the invention will now be described, by way of example only, and with reference to the accompanying drawings of which:
Figure 1 shows a schematic diagram showing a user using a mobile device and an loT device connected to a base station node according to a embodiments of the invention;
Figure 2 shows a flowchart of the steps performed by the base station after receiving a request to offload a processing task by a mobile device according to an embodiment of the invention;
Figure 3 shows a schematic diagram of a base station node according to an embodiment of the invention;
Figure 4 shows a schematic diagram of the connection of a user equipment (UE) with an RAN base station node according to an embodiment of the invention;
Figure 5 shows a schematic diagram of the connection of an internet of things (IoT) device with an RAN base station node according to an embodiment of the invention;

### Detailed description of the embodiments

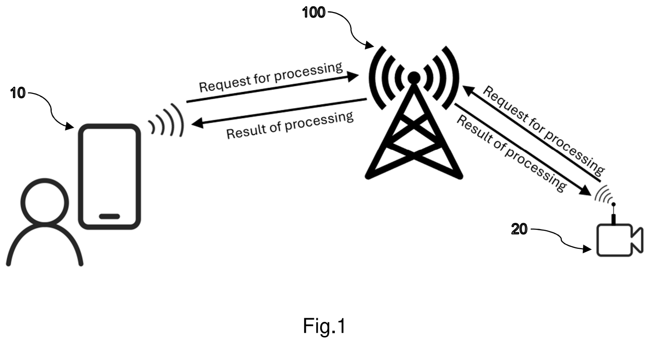

Figure 1 shows a user using a user equipment 10, such as a mobile device, which is connected to a base station 100 of radio access network (RAN). According to the present invention, the user equipment 10 may offload some of the processing tasks that it is required to perform to the base station 100. In this manner, when the user equipment 10 identifies that it requires further processing power, it may make a request to the base station 100 to perform at least a portion of the current processing on its behalf. If the base station 100 accepts this request, the base station 100 performs the processing of this offloaded task using the computational resources available to the base station 100. Once the processing has been performed, the base station 100 can then send the result of the processing back to the user equipment 10.

Other types of devices may be able to use the method of the present invention and offload processing to the base station 100, not just mobile devices, and some of these are discussed later. Non-mobile devices such as, but not limited to, desktop computers and devices of the Internet of Things (IoT) may also benefit from the present invention. For example, figure 1 also shows an internet of things (IOT) device 20, such as a camera, connected to the base station 100. Such a camera may be able to perform numberplate or facial recognition, but require extra computing resources for some of its functions.

Much of the below discussion relates to mobile devices, but the examples describing mobile devices 10 apply equally to any other devices that can connect to the RAN base station 100 and request offloading of processing of its tasks, and these examples should not be considered as limited to just mobile devices 10.

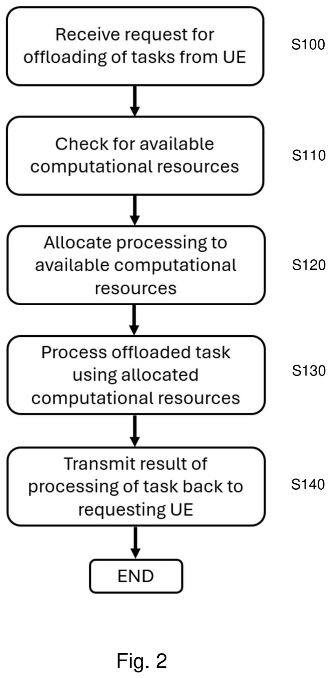

An overview of the function of the base station 100 when receiving a request from a mobile device 10, or other device, to offload processing of one or more tasks is summarised in figure 2.

At step S100, a request message from a user equipment (UE) such as a mobile device 10 is received by the base station 100, the request message requesting that a processing task is offloaded to the base station 100 for processing. That is, the request message asks that the base station 100 receives a processing task from the mobile device 10 and uses the computational resources available to it to process the task on behalf of the mobile device 10.

At step S110, the base station 100 checks whether it has the computational resources available to perform the processing of the offloaded task from the mobile device 10. The assessment of the availability of the resources may require synchronisation with traditional reservation processes of the related network capabilities (for example via Slicing, QoS reservation, API, etc.).

At step S120, if the base station 100 has available computational resources, the task is allocated to these resources for processing. If no available resources are identified, the request to process the task is refused.

At step S130, the allocated computational resources process the offloaded task on behalf of the mobile device 10, so that the mobile device 10 does not have to process the task itself.

At step S140, the base station 100 transmits the result of the processing of the offloaded task to the mobile device 10 that requested the task to be offloaded, and then the process ends. This point may be suitable for triggering any billing for the service.

The base station 100 will have processors and memory associated with it. The computational resources available to the base station 100 may include these processors and memory (both permanent and volatile), such that the offloaded tasks from the mobile devices 10 may be processed at the base station 100 itself. However, the computational resources available to the base station 100 may also include resources external to the base station 100. These may be resources at other connected base stations 100, cloud computing services, distributed computing resources, external server stations or any other computational resources connected to the base station 100. Theses may even be other mobile devices connected to the base station 100 that have made their computational resources available to the base station 100.

In order for the base station 100 to be adapted to perform the offloaded processing from a user equipment 10, the middleware of the base station 100 will need to be updated.

Middleware is a software layer run on the processor of the base stations 100 of radio access networks (RANs) and acts as an intermediary between mobile devices 10 and the RANs. It facilitates communication and data exchange, enabling mobile devices 10 to connect to the network efficiently and effectively. The middleware reduces the complexities of the underlying hardware and network protocols, allowing developers to create applications without needing to understand the details of how different devices and networks communicate. It further ensures compatibility between diverse mobile devices 10 and various RAN technologies. This is especially important given the wide range of operating systems, hardware capabilities, and network standards in use today.

The middleware plays a crucial role in facilitating this connection, acting as an intermediary that enhances communication, data processing, and interoperability among diverse systems. In the context of mobile devices, which vary significantly in terms of hardware capabilities, operating systems, and user interfaces, middleware serves to allow for a more uniform interaction with base stations 100 of the RANs.

The middleware manages the process of establishing, maintaining, and terminating connections between mobile devices 10 and the RAN. It helps devices negotiate the best possible connection parameters, optimizing performance based on current network conditions. The middleware can also manage data processing and formatting, ensuring that the information sent and received is compatible with both the mobile device 10 and the RAN. This includes data compression, encryption, and error handling. It may also maintain session continuity during communication, managing user sessions and ensuring that data flows smoothly even when network conditions change or interruptions occur.

Middleware plays a pivotal role in enhancing the performance, reliability, and user experience of mobile connectivity by simplifying the integration between mobile devices 10 and radio access networks.

The middleware layer is implemented as a software module within the base station 100. It includes interfaces for communication with mobile devices 10 and the RAN infrastructure. The middleware layer is designed to be scalable and capable of handling multiple concurrent tasks from various mobile devices 10.

According to the present invention, the middleware is also adapted to allow for spare resources available to a base station 100 to be utilised by a user equipment (UE) 10, such as a mobile device 10.

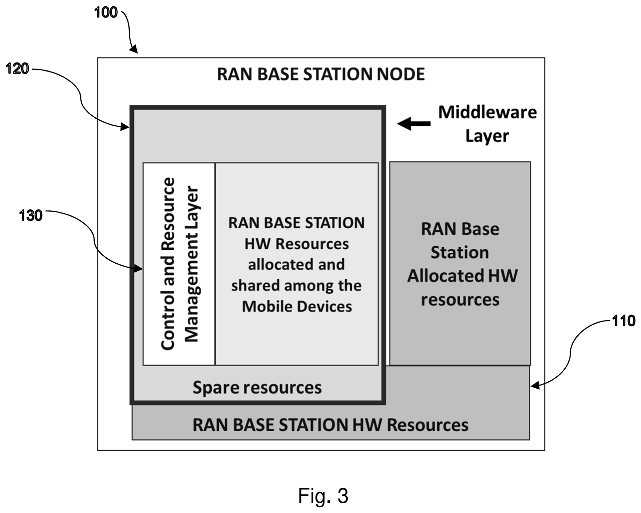

Figure 3 shows a schematic diagram of a base station 100 node according to embodiments of the invention. The base station 100 has hardware resources 110 located at the base station 100, including memory and processors, some of which are allocated to perform the base station's usual functions in connecting mobile devices 10 to a telecommunications network. Further hardware resources may be available to the base station 100 that are not located at the base station 100, but still allocated for use by the base station 100.

A base station 100 has one or more processors, and these have a high processing capacity. Further, there are unlikely to be issues with electrical power, as a base station 100 would normally be wired to the national electricity grid. Accordingly, a base station 100 may have spare resources 120 which can be used to perform further processing tasks. These spare resources 120 may be allocated to be shared with connected mobile devices 10.

In particular, according to embodiments of the invention, the base station 100 can be configured to use its spare resources 120 to offload tasks from connected mobile devices 10. In this case, the middleware layer running on the base station 100 may receive high-processing tasks from mobile devices, such as Al computations, data analysis, and other demanding tasks. The middleware layer may then utilise the superior computational resources of the base station 100 to execute the received tasks efficiently, instead of requiring the mobile device 10 to perform the processing themselves. Upon completion of the tasks, the middleware layer sends the results back to the respective mobile devices 10. Accordingly, the mobile device 10 can access the higher processing applications that it would not normally be able to access by offloading the processing to the base station 100 via the middleware.

As shown in figure 3, the resources of the base station 100 are shared between the base station's usual functions and spare resources 120 available to connected mobile devices 10. A control and resource management layer 130 within the middleware providing an interface with the user device 10.

In order to achieve this offloading of the of tasks from the mobile device 10 to the base station 100 of the RAN, the middleware layer will need to use communication protocols to interact with mobile devices 10 and the RAN infrastructure. Preferably, these protocols will be standardised. This ensures secure and reliable transmission of data between mobile devices 10 and the base station 100.

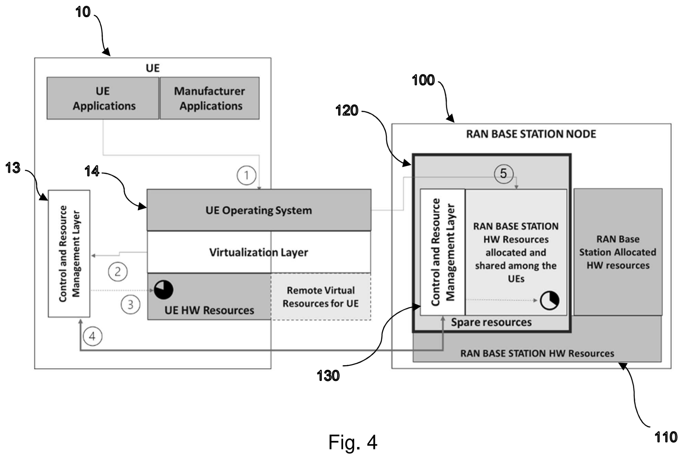

An example of the invention is shown in figure 4. Here a user equipment (UE) 10 such as a mobile device is connected to the base station 100 and is trying to process applications that may require more processing power than the UE 10 can provide. The communication steps 1 to 5 discussed below are identified by numbers in circles. Accordingly, at step 1, an application of the UE 10 requests that the operating system 14 of the UE 10 allocates hardware resources for one or more specific task(s). At step 2, a hidden layer in the UE 10 called for example a *"virtualization layer",* which may be part of the operating system 14, intercepts the request and delegates to a control and resource management layer 13 of the UE 10 the assignment to control, allocate, schedule and synchronise (orchestrate) the local and remote resources to perform the task(s). At step 3 the operations system of the UE 10 or the control and resource management layer 13 in the UE checks if the local hardware resources of the UE 10 are enough to perform the requested task(s). At step 4, the UE control and resource management layer 13 constantly synchronises with the base station's control and resource management layer 130 to get a map of available resources on the two sides. At step 5, if it is determined that the UE 10 will make use of the base station's spare resources 120, then these resources 120 are allocated to execute the UE task(s).

There are various technical advantages of the present invention of offloading high-processing tasks from a mobile device 10 to a base station 100.

An important advantage is improved performance by using the higher computational power available to the base station 100. Whilst modem mobile devices 10 may be powerful compared to historic standards, they are still constrained by their processing power. Therefore, offloading resource-intensive tasks (e.g., Al computations, video encoding/decoding, 3D rendering) to more powerful off-device processors enables these tasks to be performed more efficiently This results in faster processing times and better overall performance. The offloading may even allow for the processing of tasks that would not be otherwise possible by the mobile device, hence bringing further functionality to the device.

Offloading may also allow for parallel processing, as tasks like machine learning (ML) or complex mathematical operations benefit from parallel processing. Therefore, using a separate processor, such as the processing power available to a base station 100, can allow for tasks to be carried out in parallel, significantly speeding up computations compared to the limited capabilities of the mobile device's processor.

Another important consideration is that the processing of high-processing demand tasks uses a lot of power. Therefore, offloading at least part of the processing may reduce power consumption. Since mobile devices 10 are limited by their battery life, running high-computation tasks on the main processor will likely lead to excessive power consumption. Therefore, offloading the task to a more power-efficient processor of the external infrastructure can lead to substantial power savings.

The excessive power consumption can lead to the secondary problem in a mobile device 10 of excessive heat generation. Mobile devices 10 have limited thermal dissipation capabilities, and so performing high-demand tasks directly on the mobile processor can generate excessive heat, which can negatively affect the overall performance of the mobile device 10 and the corresponding user experience. Therefore, the offloading computationally heavy tasks to a base station 100 may help reduce the heat generated in the mobile device, keeping the device cooler and more stable.

The middleware layer can handle multiple tasks from various mobile devices 10 simultaneously, making it suitable for large-scale deployments. Offloading to the base station 100 provides significantly increased computing resources for extremely demanding tasks. Therefore, the mobile device 10 can take on complex workloads without being constrained by the mobile device's own hardware limitations. This also provides flexibility in handling tasks that require massive computational power (e.g., large-scale data analysis, machine learning model training).

Another advantage is that new functionalities do not necessarily require the latest version of the mobile device, as the new functionalities can be upgraded in the base station software, rather than the mobile device 10 hardware.

This leads on the advantage that the invention reduces the need for overpowered mobile hardware. By offloading complex tasks to the external processors of the base stations, the mobile devices 10 do not need to be equipped with the most expensive or powerful hardware to perform demanding tasks. This can lower the overall cost of the device, reduce its weight, and allow for a slimmer form factor, making the device more affordable and portable.

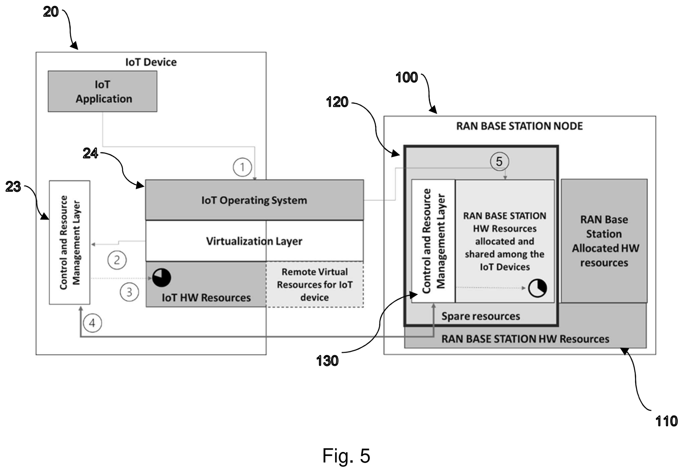

A second example of the invention is shown in figure 5. Here, instead of a user equipment (UE) 10, the device connected to the base station 100 is an internet of things (IoT) device 20. Again, the device 20 may be trying to process applications that may require more processing power than the loT device 20 can provide. The communication steps 1 to 5 discussed below are identified by numbers in circles. Accordingly, at step 1, an application of the loT device 20 requests that the operating system 24 of the loT device 20 allocates hardware resources for one or more specific task(s). At step 2, a hidden layer in the loT device operating system 24 called for example a *"virtualization layer",* which may be part of the operating system 24, intercepts the request and delegates to a control and resource management layer 23 of the loT device 20 the assignment to control, allocate, schedule and synchronise (orchestrate) the local and remote resources to perform the task(s). At step 3 the operations system 24 of the loT device 20 or the control and resource management layer 23 in the loT device 20 checks if the local hardware resources of the loT device 20 are enough to perform the requested task(s). At step 4, the loT device control and resource management layer 23 synchronises with the base station control and resource management layer 130 to get a map of available resources on the two sides. At step 5, if it is determined that the loT device 20 will make use of the base station's spare resources 120, then these resources 120 are allocated to execute the loT device task(s).

The present invention has further advantages for loT devices. There are many types of loT devices that may use the present invention. For example, a non-exhaustive list for illustration only includes devices for traffic monitoring, numberplate recognition, weather measurements, CCTV face recognition, etc. These may be remote devices that have access to limited power and computational resources, and so unable to provide any form of complex processing. However, as long as they have enough processing power to send a request for processing to a nearby base station 100 and receive the corresponding result, the loT device may be able to perform functions that it would ordinarily be impossible to perform with the computational resources available to it.

In some cases, the computational resources available to the base station 100 may be prioritised for use by the loT device, depending on a range of factors. For example, if the police wanted to use the face recognition of a CCTV that is arranged to offload processing to the base stations 100, then when an urgent request for this service is made by the police, this may be given higher priority than other tasks that the base station 100 is performing.

The priority of the base stations 100 computational resources may also be changed for other users of the invention. For example, during peak hours the base station 100 may already have a high processing load due to normal telecommunications traffic. It would not be suitable to throttle mobile communications in order to process tasks offloaded by other users. In this case, the computational resources available to a mobile device 10 or an loT device 20 may be limited at certain times, for example periods of high demand for the RAN telecommunications network. The telecommunications network operator may also impose different tariffs for offloading tasks at different times depending on demand.

Preferably, the middleware of an existing base station 100 may be updated to add the new functionality without the need for updating its hardware. For example, the middleware of a base station 100 may be updated via an over-the-air (OTA) software update. This is usually a complex and multi-stage process that ensures minimal disruption to service and ideally maintains the operational integrity of the network. Middleware in a RAN context typically includes software components that handle essential tasks such as communication protocol handling, network resource management, and inter-process communication. The update may be done remotely to provide the new features of the middleware, and may also include further updates to improve performance, fix bugs or enhance security.

In summary, offloading high-processing-demand tasks from a mobile device 10 (or loT device 20) to a separate processor through the connection to the base station 100 provides a variety of technical advantages, including enhanced performance, power efficiency, reduced thermal load, and scalability. This enables mobile devices 10 to handle more complex tasks without sacrificing battery life or user experience, while also allowing for faster response times and more advanced capabilities. By leveraging separate high-performance processors, mobile devices 10 may evolve to handle increasingly demanding applications with improved efficiency and cost-effectiveness.

Although particular embodiments have been described as examples to illustrate the invention, a number of alternatives and variations would be apparent to the skilled person without departing from the invention as set out in the claims.

## Claims

1. A method of offloading a high-processing task by a user equipment to a base station of a radio access network, the method comprising:
the user equipment communicating with a middleware layer executing on a processor of the base station and requesting that at least a portion of the processing of the tasks is performed by computational resources available to the base station; and
the middleware layer utilizing the computational resources available to the base station to process the task.

2. A method of claim 1, wherein upon after completion of the processing of the task by the computational resources available to the base station, the middleware layer sends the results of the processing back to the user equipment.

3. The method of claim 1 or 2, wherein the high-processing task is one of Al computations, data analysis, and other demanding processing tasks.

4. The method of any preceding claim, wherein the middleware layer communicates with user equipment using communication protocols which are to be standardised.

5. The method of any preceding claim, wherein prior to the user equipment requesting that processing of the task is carried out by computational resources available to the base station, the user equipment determines that the computational resources of the user equipment is insufficient for processing the task by itself.

6. The method of any preceding claim, further comprising executing a virtualisation layer on a processor of the user equipment, the virtualisation layer performing:
intercepting the request to perform the task by the computational resources available to the base station;
delegating to a control and resource management layer of the user equipment the assignment to control, allocate, schedule and synchronise the local and remote resources to perform the task.

7. The method of claim 5, wherein the control and resource management layer of the user equipment synchronises with a control and resource management layer of the middleware layer of the base station to determine the combined available computational resources of the user equipment and the base station.

8. The method of claim 6, wherein the control and resource management layer further performs:
allocating at least a portion of processing of the task to the computational resources available to the base station.

9. The method of any preceding claim, wherein the computational resources available to the base station includes at least one of the processors and the memory located at the base station.

10. The method of any preceding claim, wherein the computational resources available to the base station includes remote computational resources connected to the base station via the radio access network including network capabilities which could be reserved for the scope of the middleware layer following available standard reservation processes for network resources.

11. The method of any preceding claim, wherein the availability to the user equipment of the computational resources available to the base station is dependent on time.

12. The method of any preceding claim, wherein the middleware of the base station is installed and upgraded by a software update.

13. The method of any preceding claim, wherein the user equipment is either a mobile device such as a smartphone, a tablet, a notebook or a laptop; or an internet of things device.

14. A base station of a radio access network comprising at least one processor, the at least one processor executing a middleware layer, the middleware layer arranged to perform the method of any preceding claim.

15. A radio access network comprising at least one base station as set out in claim 14.
